# EUROPEAN PATENT APPLICATION

(11) **EP 4 583 279 A1**
(43) Date of publication of application: **09.07.2025**
(21) Application number: 24815835.4
(22) Date of filing: 28.05.2024
(51) Int. Cl.: H01M 50/24, H01M 50/207, H01M 50/383, C09J 163/00

(54) **BATTERY MODULE**

(30) Priority: 31.05.2023 KR 20230069639
(71) Applicant: LG Energy Solution, Ltd., Seoul 07335 (KR)
(72) Inventor: JUNG, Min Yong, Daejeon 34122 (KR); CHOI, Bum, Daejeon 34122 (KR); CHUNG, Jae Heon, Daejeon 34122 (KR); KIM, In Hyeok, Daejeon 34122 (KR)
(74) Representative: Plasseraud IP
(86) International application number: PCT/KR2024/007210
(87) International publication number: WO 2024/248459

(57) **Abstract**

A battery module related to one example of the present invention comprises a plurality of battery cells having terminal portions, a case having a plurality of seating portions in which each battery cell is seated and having an accommodation space in which the plurality of battery cells is accommodated, an intermediate frame having a plurality of support holes with a diameter larger than the diameter of each battery cell and mounted on the case to divide the accommodation space in the case into a cooling space where cooling liquid is accommodated and a terminal exposure space where the terminal portion of each battery cell is located, and a potting portion having a first region provided in the terminal exposure space to surround the terminal portion of the battery cell and one side of the intermediate frame, and a second region connected to the first region and filled into the space between each battery cell and the support hole.

## Description

### Technical Field

The present invention relates to a battery module, and more specifically, relates to a battery module capable of waterproofing a terminal exposure space from a cooling space using a waterproof adhesive.

This application claims the benefit of priority based on Korean Patent Application No. 10-2023-0069639 dated May 31, 2023, the disclosure of which is incorporated herein by reference in its entirety.

### Background Art

As eco-friendly vehicles, electric vehicles, hybrid vehicles, and plug-in hybrid vehicles to which electric motors generating driving force using electrical energy are applied instead of engines generating driving force by burning existing fossil fuels are released around the world.

Among eco-friendly vehicles using this electrical energy, electric vehicles and plug-in hybrid vehicles receive power from an external charging facility connected to a grid to charge batteries provided in the vehicles, and produce kinetic energy required for vehicle driving using the charged power of the batteries.

The batteries used in these eco-friendly vehicles require high output power, and thus generate a large amount of heat, where to improve battery performance and lifespan, by efficiently discharging the heat generated from the battery, it is very important to prevent the battery from overheating.

Conventionally, an air-cooling method, or a water-cooling method, and the like is known as a cooling system for discharging heat from the battery. Among these, a direct water-cooling method is a method of directly impregnating battery cells with cooling liquid to discharge the heat of the battery cell directly into the cooling liquid.

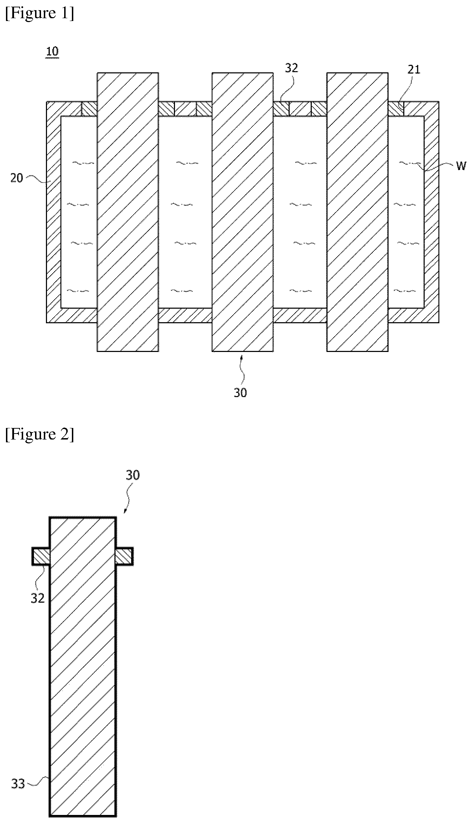

Figure 1 schematically shows a configuration diagram of a battery module according to a conventional art, and Figure 2 is a schematic diagram of the battery cell shown in Figure 1.

Referring to Figures 1 and 2, a battery module (10) in the direct water-cooling method comprises a cell frame (20), and a plurality of battery cells (30) arranged inside the cell frame (20). The plurality of battery cells (30) is arranged to be spaced apart within the cell frame (20), and the cell frame (20) has a structure in which cooling liquid (W) is flowable inside.

The cell frame (20) has an assembly hole (21) into which the battery cell (10) is inserted, and a tape (32) made of a compressible material in a ring shape is attached to the battery cell (30). In addition, a tubing member (33) is assembled to surround the outer peripheral surface of the battery cell (30) and the tape (32). At this time, the tubing member (33) is for waterproofing the battery cell (30), which may be formed of a polymer material.

The tape (32) protrudes in the lateral direction of the battery cell (31), and the tape (32) is forcefully fitted into the assembly hole (21) of the cell frame (20).

Meanwhile, to implement a waterproof structure in the conventional battery module (10), the tape (32) was wrapped around the battery cell (30), and then heat-treated so that the tubing member (33) surrounded the outer surface of the battery cell (30). Thereafter, the tape (32) of the battery cell (30) was forcefully fitted into the assembly hole (21) of the cell frame (20), thereby having a structure sealing the gap between the battery cell (30) and the assembly hole (21) of the cell frame (20).

Such an assembly process is performed for each battery cell (30), but as the number of battery cells (30) increases, assembly defects between the battery cells (30) and the assembly holes (21) of the cell frame (20) may be caused. Accordingly, as the number of battery cells (30) increases, there is a possibility that cooling liquid (W) leaks through the gap between the battery cells (30) and the assembly holes (21) of the cell frame.

Also, as the conventional battery module (10) is waterproofed individually for each battery cell (30), the bonding force between the cell frame (20) and the battery cell (30) may be weakened due to situations such as vibration or shock, whereby there is a possibility that cooling liquid (W) leaks.

In addition, to implement a waterproof structure, the conventional battery module (10) used many components and required a separate process to assemble these components, whereby there was a problem that the assembly process of the battery module (10) was complicated.

### Disclosure

### Technical Problem

The present invention is intended to provide a battery module capable of integrally forming a waterproof structure of terminal portions of a plurality of battery cells by applying and curing a waterproof adhesive to an intermediate frame dividing the battery cells.

Also, the present invention is intended to provide a battery module capable of sealing a gap between a support hole of an intermediate frame and a battery cell using a waterproof adhesive.

In addition, the present invention is intended to provide a battery module equipping a portion facing a vent portion of a battery cell with a flame discharge passage portion.

### Technical Solution

To solve the above-described problems, a battery module according to one example of the present invention comprises a plurality of battery cells having terminal portions, a case having a plurality of seating portions in which each battery cell is seated and having an accommodation space in which the plurality of battery cells is accommodated, an intermediate frame having a plurality of support holes with a diameter larger than the diameter of each battery cell and mounted on the case to divide the accommodation space in the case into a cooling space where cooling liquid is accommodated and a terminal exposure space where the terminal portion of each battery cell is located, and a potting portion having a first region provided in the terminal exposure space to surround the terminal portion of the battery cell and one side of the intermediate frame, and a second region connected to the first region and filled into the space between each battery cell and the support hole.

Also, the potting portion may be provided so that the second region surrounds at least a portion of the gap space between the support hole and the battery cell. As one example, the respective battery cells may also be arranged so that their radial center coincides with the center of the support hole, and the respective battery cells may also be arranged such that their radial center does not coincide with the center of the support hole. At this time, a gap may be formed between the support hole and the battery cell due to the diameter difference between the support hole and the battery cell. As the second region of the potting portion fills such a gap space, it is possible to waterproof the terminal exposure space from the cooling space.

In addition, the first region and the second region of the potting portion may be formed integrally.

Furthermore, it may further comprise a bus bar electrically connected to the terminal portion of the battery cell in the terminal exposure space, and the potting portion may be provided to surround the terminal portion of the battery cell and the bus bar in the terminal exposure space.

Also, the terminal portion may comprise a positive electrode terminal and a negative electrode terminal, where the positive electrode terminal and the negative electrode terminal may be electrically connected to a positive electrode bus bar and a negative electrode bus bar, respectively, in the terminal exposure space. The potting portion may be provided to surround a welded portion of the positive electrode terminal and the positive electrode bus bar of the battery cell and a welded portion of the negative electrode terminal and the negative electrode bus bar in the terminal exposure space.

In addition, the first region and the second region of the potting portion may be formed by applying and curing a waterproof adhesive to the terminal exposure space. At this time, the first region and the second region of the potting portion may be formed integrally by applying and curing a waterproof adhesive to the terminal exposure space.

Furthermore, the waterproof adhesive may comprise an epoxy-based main agent having a first viscosity and a curing agent having a second viscosity different from the first viscosity.

Also, the waterproof adhesive may have a viscosity in a range of 25,000cp to 30,000cp.

In addition, each battery cell may have a vent portion provided in the opposite direction of the terminal portion connected to the bus bar. Also, the seating portion of the case may comprise a seating groove in which the vent portion of the battery cell is accommodated.

Furthermore, the battery module may comprise an adhesive portion for attaching the vent portion of the battery cell to the seating groove.

Also, the case may have a bottom provided with a plurality of seating grooves. Each seating groove may be provided on the inner side (the surface facing the accommodation space) of the bottom. In addition, the case may have a plurality of vent grooves on the outer side of the bottom which is the opposite side of the seating groove.

In addition, each vent groove may be provided so that its center is positioned coaxially with the center of each seating groove.

Furthermore, the case has a seating rib provided between the seating groove and the vent groove, where the seating rib may have a thickness smaller than the thickness of the bottom of the case.

Also, the battery module may comprise a lower frame connected to the case to surround the vent groove.

In addition, a flame discharged through the vent portion of the battery cell may damage the seating rib, thereby moving to the space between the vent groove and the lower frame through the damaged region of the seating rib.

### Advantageous Effects

As discussed above, the battery module related to at least one example of the present invention has the following effects.

By applying and curing a waterproof adhesive to an intermediate frame dividing the plurality of battery cells in the case, it is possible to integrally form a waterproof structure of terminal portions of the plurality of battery cells can be formed as an integrated structure.

Also, it is possible to seal the gap between the support hole of the intermediate frame through which the battery cell passes and the battery cell using a waterproof adhesive.

In addition, it is possible to integrally seal the terminal portions of the plurality of battery cells, and the gaps between the support holes and the battery cells in the case.

Compared to the conventional method of forcefully fitting each battery cell into a case, a waterproof adhesive is applied to one side of the intermediate frame and cured in a state where the battery cell is supported on the intermediate frame, whereby it is possible to seal the terminal potions of the battery cells, and the gaps between the support holes and the battery cells. can be sealed. In addition, by adjusting the viscosity of the waterproof adhesive and the size of the gap, it is possible to integrally seal the terminal portions of the battery cells, and the gaps between the support holes and the battery cells.

Also, it is possible to simplify the assembly process of the battery module, and simultaneously it is possible to improve a waterproofing efficiency of the battery module.

In addition, the possibility of chain ignition of a plurality of battery cells can be reduced.

### Description of Drawings

Figure 1 schematically shows a configuration diagram of a battery module according to a conventional art.
Figure 2 is a schematic diagram of the battery cell shown in Figure 1.
Figure 3 is a schematic diagram of a battery module related to one example of the present invention.
Figure 4 is a cross-sectional diagram cut along Line X-X in Figure 3.
Figure 5 is a schematic diagram of the battery module shown in Figure 3 in a state where the respective components are separated.
Figures 6 to 10 are diagrams for explaining manufacturing processes of a battery module according to one example of the present invention.
Figure 11 is a diagram for explaining a function of a flame discharge passage portion when a battery cell ignites.

### Mode for Invention

Hereinafter, a battery module according to one example of the present invention will be described with reference to the accompanying drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

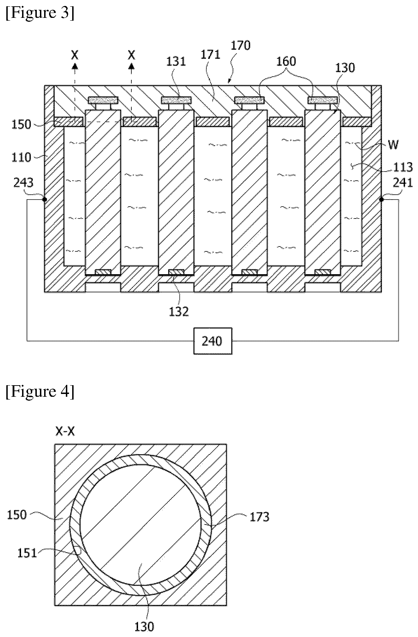

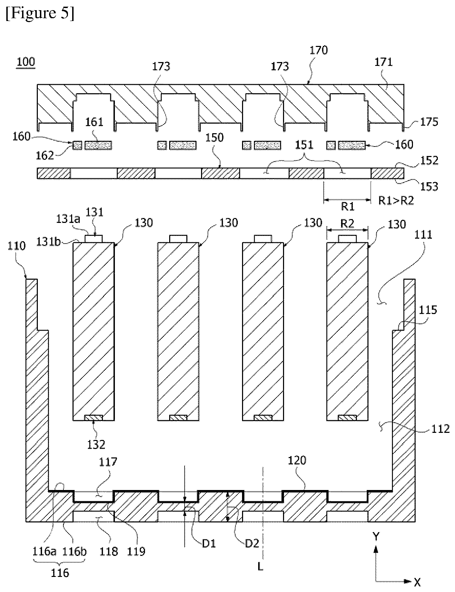

Figure 3 is a schematic diagram of a battery module related to one example of the present invention, Figure 4 is a cross-sectional diagram cut along Line X-X in Figure 3, and Figure 5 is a schematic diagram of the battery module shown in Figure 3 in a state where the respective components are separated.

The battery module (100) according to one example of the present invention comprises a plurality of battery cells (130) having a terminal portion (131). The battery cell (130) is a secondary battery, which may be a cylindrical, pouch-shaped, or rectangular battery cell. Hereinafter, in the present example, the matter that the battery cells (130) are cylindrical battery cells will be described as an example.

Each battery cell (130) may be provided with a vent portion (132) for expelling gas or flame. Such a vent portion (132) may be formed to have a thinner thickness compared to the surrounding regions of the battery cell (130). In this structure, when the internal pressure of the battery cell (130) increases above a certain level, the vent portion (132) is preferentially ruptured to discharge the gas or flame out of the battery cell (130).

In this document, the Y-axis direction represents the longitudinal direction of the battery cell, and the X-axis direction represents the radial direction of the battery cell.

Each battery cell (130) may have a terminal portion (131) provided at one end along the longitudinal direction (Y-axis direction) and a vent portion (132) provided at the other end. The vent portion (132) is positioned in the opposite direction of the terminal portion (131).

In this document, the terminal portion (131) comprises a positive electrode terminal (131a) and a negative electrode terminal (131b), where the positive electrode terminal (131a) and the negative electrode terminal (131b) are electrically connected to a positive electrode bus bar (161) and a negative electrode bus bar (162), respectively. In addition, the positive electrode terminal (131a) and the negative electrode terminal (131b) may each be electrically connected to the positive electrode bus bar (161) and the negative electrode bus bar (162), respectively, at one end of the battery cell (130).

In the battery cell (130), the terminal portion (131) is electrically connected to a bus bar (160) at one end along the longitudinal direction (Y-axis direction), and the vent portion (132) is provided at the other end.

The battery module (100) comprises a case (110) having a plurality of seating portions (117) in which each battery cell (130) is seated and having an accommodation space (112) in which the plurality of battery cells (130) is accommodated.

Also, the case (110) has a bottom (116) provided with the seating portions (117), and the seating portions (117) are provided on the inner side (116a) of the bottom (116).

In addition, the battery module (100) comprises an intermediate frame (150) having a plurality of support holes (151) having a diameter (R1) larger than the diameter (R2) of each battery cell (130). When the battery cell (130) is a cylindrical battery cell, the support hole (151) may be a circular or oval hole. The number of support holes (151) may be provided to be equal to the number of battery cells (130) disposed in the accommodation space (112). The intermediate frame (150) may have the plurality of support holes (115) according to the arrangement shape of the plurality of battery cells (130) in the case (110).

The intermediate frame (150) is mounted on the case (110) to divide the accommodation space (112) in the case (110) into a cooling space (113) where cooling liquid (W) is accommodated and a terminal exposure space (114) where the terminal portion (131) of each battery cell (130) is located.

Also, the intermediate frame (150) may have a plate shape. The intermediate frame (150) may have one side (152) facing the terminal exposure space (114) and the other side (153) facing the cooling space (113). The other side (153) is a side facing the bottom (116) of the case (110).

Referring to Figures 4 and 5, the battery module (100) comprises a potting portion (170) having a first region (171) provided in the terminal exposure space (114) to surround the terminal portion (131) of the battery cell (130) and one side (152) of the intermediate frame (150), and a second region (173) connected to the first region (171) and filled into the space (gap) between each battery cell (130) and the support hole (151).

The potting portion (170) may be provided so that the second region (173) surrounds at least a portion of the gap space between the support hole (151) and the battery cell (130). In addition, the potting portion (170) may be provided so that the second region (173) surrounds the gap space between the support hole (151) and the battery cell (130) along the circumferential direction of the battery cell (130) wholly.

In addition, the first region (171) and the second region (173) of the potting portion (170) may be formed integrally, and the battery module (100) comprises a bus bar (160) electrically connected to the terminal portion (131) of the battery cell (130) in the terminal exposure space (114).

The potting portion (170) may be provided to surround the terminal portion (131) of the battery cell (130) and the bus bar (160) in the terminal exposure space (114).

The bus bar (160) may comprise a positive electrode bus bar (161) and a negative electrode bus bar (162), and the positive electrode terminal (131a) and the negative electrode terminal (131b) constituting the terminal portion (160) may each be electrically connected to the positive electrode bus bar (161) and the negative electrode bus bar (162), respectively, at one end of the battery cells (130). That is, in each battery cell (130), a welded portion of the positive electrode terminal (131a) and the positive electrode bus bar (161) and a welded portion of the negative electrode terminal (131b) and the negative electrode bus bar (162) are each located at one end of the battery cell (130), and in each battery cell (130), a welded portion of the positive electrode terminal (131a) and the positive electrode bus bar (161) and a welded portion of the negative electrode terminal (131b) and the negative electrode bus bar (162) are located in the terminal exposure space (114). In this instance, the potting portion (170) surrounds the welded portion of the positive electrode terminal (131a) and the positive electrode bus bar (161) and the welded portion of the negative electrode terminal (131b) and the negative electrode bus bar (162).

In addition, the first region (171) and the second region (173) of the potting portion (170) may be formed by applying and curing a waterproof adhesive to the terminal exposure space (114). Furthermore, the first region (171) and the second region (173) of the potting portion (170) may be formed integrally.

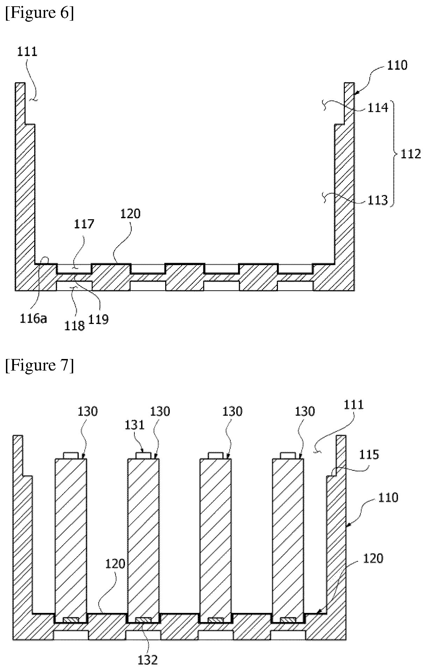

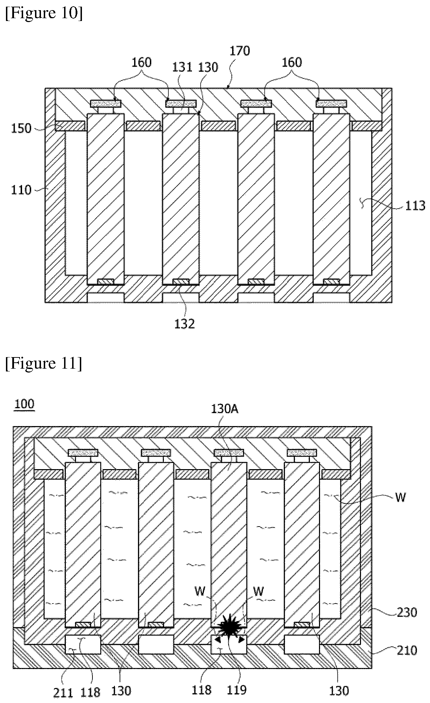

Figures 6 to 10 are diagrams for explaining manufacturing processes of a battery module according to one example of the present invention, and Figure 11 is a diagram for explaining a function of a flame discharge passage portion when a battery cell ignites.

The battery module (100) related to one example of the present invention may comprise a plurality of battery cells (130) each equipped with a terminal portion (131) and a vent portion (132) on the opposite side of the terminal portion (131), and a case (110) having a plurality of seating grooves (117) in which the vent portion (132) of each battery cell (130) is seated, and having a cooling space (113) where cooling liquid (W) is accommodated and a terminal exposure space (114) where the terminal portion (131) of each battery cell (130) is located.

In addition, the battery module (100) may comprise an intermediate frame (150) having a plurality of support holes (151) through which each battery cell (130) passes and provided in the case (110) to partition the cooling space (113) and the terminal exposure space (114), and a potting portion (170) provided in the terminal exposure space (114) to surround the terminal portion (131) of the battery cell (130) and one side of the intermediate frame (150).

The case (110) has an accommodation space (112) accommodating a plurality of battery cells (130), and as one example, the case (110) may be in the form of a cylinder with an open top. The case (110) has an insertion opening (111) at the opened top. The plurality of battery cells (130) may enter the inside of the case (110) through the insertion portion (111).

Also, the seating portion of the case (110) may comprise a seating groove (117) in which the vent portion (132) of the battery cell (130) is accommodated.

The case (110) may comprise one or more inlet ports (241) for introducing cooling liquid (W) into the cooling space (113) and one or more discharge ports (243) for discharging the cooling liquid (W) from the cooling space (113) to the outside.

The accommodation space (112) may be divided into the cooling space (113) where cooling liquid (W) is accommodated and the terminal exposure space (114) where the terminal portion (131) of each battery cell (130) is located by the intermediate frame (150). As one example, along the longitudinal direction (Y-axis direction) of the battery cell (130) disposed in the accommodation space (112), the accommodation space (112) may be divided into the cooling space (113) and the terminal exposure space (114). In this instance, it is important to prevent the cooling liquid (W) in the cooling space (113) from leaking into the terminal exposure space (114).

Also, a stepped portion (115) may be provided on the inner surface of the case (110). The intermediate frame (150) may be seated on the stepped portion (115). The intermediate frame (150) is inserted into the accommodation space (112) of the case (110) so that the edge of the intermediate frame (150) is caught by the stepped portion (115).

The potting portion (170) may comprise a third region (175) provided to fill the gap between the intermediate frame (150) and the case (110). The third region (175) may perform a function of sealing the gap between the intermediate frame (150) and the stepped portion (115) of the case (110). In addition, the first region (171), the second region (173), and the third region (175) of the potting portion (170) may be formed integrally using the waterproof adhesive.

In this way, in the battery cell (130), the welded portion of the positive electrode terminal (131a) and the positive electrode bus bar (161) and the welded portion (162) of the negative electrode terminal (131b) and the negative electrode bus bar may be sealed by the first region (171) of the potting portion (170), the gap between the support hole (151) and the battery cell (130) may be sealed by the second region (173) of the potting portion (170), and the gap between the intermediate frame (150) and the stepped portion (115) of the case (110) may be sealed by the third region (175) of the potting portion (170).

The cooling space (113) may be a space between the bottom (116) of the case (110) and the intermediate frame (150). As the cooling liquid (W), special insulating liquid or general cooling liquid for vehicles may be used. However, when the general cooling liquid for vehicles is used as the cooling liquid (W), waterproofing treatment may also be added to the outer surface of the battery cell (130).

The terminal exposure space (114) is a space where the terminal portion (131) of the battery cell (130) is located, where the terminal exposure space (114) may be a space between the insertion opening (111) of the case (110) and one side (152) of the intermediate frame (150).

The intermediate frame (150) may support the outer peripheral surface of the battery cell (130) in a lateral direction. The lateral direction is a direction perpendicular to the longitudinal direction (Y-axis direction) of the battery cell facing the vent portion (132) from the terminal portion (131), which may be the radial direction (X-axis direction) of the battery cell.

Also, the diameter (R1) of the support hole (151) may be larger than the diameter (R2) of the battery cell (130). Each battery cell (130) penetrates the support hole (151), whereby the lower end (the other end) of the battery cell (130) provided with the vent portion (132) may be inserted into the cooling space (113), and the upper end (one end) of the battery cell (130) provided with the terminal portion (131) may be positioned in the terminal exposure space (114). As one example, the diameter difference (R1-R2) may also be set to 1mm or less.

The potting portion (170) may be provided to surround the outer peripheral surface of one end of the battery cell (130) exposed to the terminal exposure space (114) on one side (152) of the intermediate frame (150), and to surround the terminal portions (131) of the plurality of battery cells (130) integrally.

Also, the potting portion (170) may be provided to surround the gap between the support hole (151) and the battery cell (130).

The potting portion (170) may be provided by applying and curing the waterproof adhesive from the terminal exposure space (114) to one side of the intermediate frame (150). **In** addition, the potting portion (170) may adhere to one side (152) of the intermediate frame (150) as the waterproof adhesive is applied and cured.

The waterproof adhesive may have waterproofness and adhesiveness. As one example, the waterproof adhesive may be an epoxy-based hybrid structural adhesive. As the waterproof adhesive, a hybrid type two-component adhesive may be used.

The waterproof adhesive may have a viscosity in a range of 25,000cp to 30,000cp. The waterproof adhesive may comprise an epoxy-based main agent having a viscosity (first viscosity) of 24,000cp and a curing agent having a viscosity (second viscosity) of 20,000cp. Upon applying the waterproof adhesive from the terminal exposure space (114) to one side (152) of the intermediate frame (150), the viscosity of the waterproof adhesive is adjusted to an appropriate range, whereby it is possible to allow the applied waterproof adhesive to flow into the gap between the support hole (151) and the battery cell (130).

In this way, the waterproof adhesive seals the gap between the support hole (151) of the intermediate frame (150) and the battery cell (130), whereby it is possible to prevent leakage of the cooling liquid (W) through the gap between the support hole (151) and the battery cell (130).

Also, the waterproof adhesive seals the gap between the intermediate frame (150) and the stepped portion (115) of the case (110), whereby it is possible to prevent leakage of the cooling liquid (W).

Referring to Figure 5, the bottom (116) of the case (110) may be provided with a plurality of seating grooves (117) and a plurality of vent grooves (118), respectively.

The vent portion (132) of each battery cell (130) may be seated in the plurality of seating grooves (117). A partial region of the other end of the battery cell (130) comprising the vent portion (132) of the battery cell (130) may be accommodated in each seating groove (117). The plurality of seating grooves (117) is provided on the inner side (116a) of the bottom (116). The seating groove (117) may have a diameter larger than the diameter (R2) of the battery cell (130).

The plurality of vent grooves (118) may be provided on the outer side (116b) of the bottom (116).

Each vent groove (118) may be provided so that its partial region overlaps with each seating groove (117). As one example, each vent groove (118) may be provided so that its center is positioned coaxially (L) with the center of each seating groove (117). In addition, each vent groove (118) may be provided to be recessed toward each seating groove (117).

In this structure, in a state where the seating groove (117) is recessed into the outer side (116b) of the bottom (116), and the vent groove (118) is recessed into the inner side (116a) of the bottom (116), the thickness (D1) of the region between the seating groove (117) and the vent groove (118) is thinner than the thickness (D2) of the bottom (116) of the case (110).

The case (110) has a seating rib (119) provided between the seating groove (117) and the vent groove (118). The seating rib (119) is disposed to face the vent portion (132) of the battery cell (130).

The seating rib (119) has a thickness thinner than the thickness of the bottom (116) of the case (110). Upon ignition of any one battery cell (130) of the plurality of battery cells (130) accommodated in the case (110), the seating rib (119) may be provided to be damaged by a force pushing out the vent portion (132) of the ignited battery cell (130).

The seating rib (119) is provided to be thinner than the thickness (D2) of the bottom (116) of the case (110). The thickness (D1) of the seating rib (119) may be the distance between the seating groove (117) and the vent groove (118), and the thickness (D2) of the bottom (116) may be the distance between the inner side (116a) of the bottom (116) and the outer side (116b) of the bottom.

Upon internal ignition of the battery cell (130), the vent portion (132) of the battery cell (130) may be damaged by the internal pressure of the battery cell (130). At this time, the flame ejected from the vent portion (132) of the battery cell (130) damages the seating rib (119) on which the vent portion (132) is seated. The flame discharged to the outside of the battery cell (130) through the vent portion (132) may be discharged to the outside of the bottom (116) of the case (110) through the damaged portion of the seating rib (119).

Referring to Figure 11, the battery module (100) may comprise a lower frame (210) connected to the case (110) to surround the vent groove (118).

The flame discharged through the vent portion of the battery cell (130A) may move to the space between the vent groove (118) and the lower frame (210). At this time, the flame may not be discharged to the outside of the battery module (100) by the lower frame (210). In addition, the space between the vent groove (118) and the lower frame (210) may function as a flame discharge passage portion (211).

Meanwhile, as the discharge direction of the flame in the battery cell (130) faces the bottom (116) of the case (110), the flameproof rating of the potting portion (170) surrounding the terminal portion (131) is not affected, whereby it is possible to reduce the manufacturing cost of the battery module (100).

With reference to Figures 6 to 10, a method for manufacturing a battery module (100) having such a structure will be described.

The waterproof adhesive is applied to the seating groove (117) of the bottom (116) of the case (110). The waterproof adhesive applied to the seating groove (117) performs a function of fixing the other end of the battery cell (130), and forms an adhesive portion (120) after curing. The waterproof adhesive applied to the seating groove (117) may be an epoxy-based hybrid structural adhesive.

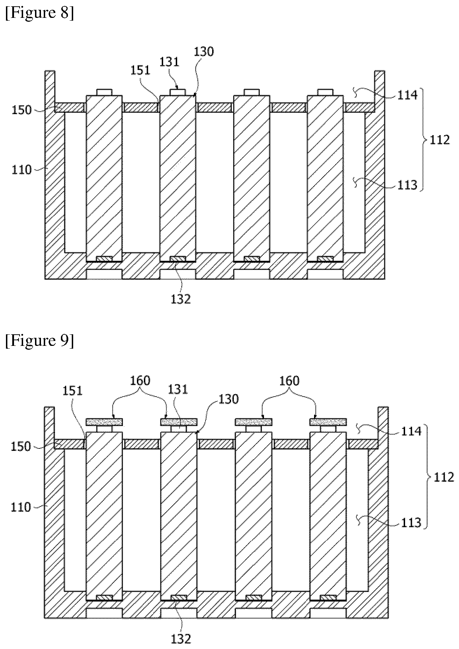

Referring to Figures 7 and 8, the plurality of battery cells (130) is inserted into the case (110). In this instance, the vent portion (132) of each battery cell (130) is accommodated in the seating groove (117) of the case (110), and the terminal portion (131) is arranged to face the insertion opening (111) side. When all the plurality of battery cells (130) are inserted into the accommodation space (112), the intermediate frame (150) is mounted on the case (110).

Referring to Figure 9, the bus bar (160, positive electrode bus bar and negative electrode bus bar) is electrically connected to the terminal portion (131) of the battery cell (130). The bus bar (160) is a known component, and thus detailed description thereof will be omitted.

After the intermediate frame (150) is coupled to the case (110), the bus bar (160) may be welded to the terminal portion (131) of the battery cell (130), where the bus bar (160) is electrically connected to the terminal portion (131) of the battery cell (130). Also, the positive electrode terminal (131a) and the negative electrode terminal (131b) may each be electrically connected to the positive electrode bus bar (161) and the negative electrode bus bar (162), respectively, at one end of the battery cell (130).

When the welding of the bus bar (160) is completed, the waterproof adhesive is applied to one side (152) of the intermediate frame (150) facing the terminal exposure space (114), and the applied waterproof adhesive is cured to form the potting portion (170). At this time, the potting portion (170) comprises a first region (171), a second region (173), and a third region (175), where the respective regions (171, 173, 175) may be formed integrally.

The waterproof adhesive is filled in the terminal exposure space (114) so that the terminal portion (131) of the battery cell (130) and the welded portion between the terminal portion (131) and the bus bar (160) are not exposed to the outside.

Referring to Figure 3, cooling liquid (W) may be supplied to the cooling space (113) within the case (110). At this time, the cooling liquid (W) may be cooled through a cooling device (chiller, 240) provided outside the battery module (100).

Also, the battery module (100) may comprise an upper frame (230) mounted on the case (110) to surround the potting portion (170).

In addition, the lower frame (210) may form a flame discharge passage portion (211) in the space between the respective vent grooves (118).

Referring to Figure 11, when any one battery cell (130A) among the plurality of battery cells (130) embedded in the battery module (100) ignites, the seating rib (119) facing the ignited battery cell (130A) is damaged. The flame discharged from the ignited battery cell (130A) is discharged to the flame discharge passage portion (211) through the vent groove (118) connected to the damaged seating rib (119).

At this time, the flame discharged to the flame discharge passage portion (211) is not discharged to the outside of the battery module (100) by the lower frame (210). In addition, it is possible to prevent the flame of the ignited battery cell (130A) from being transmitted to the surrounding battery cells (130).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to a battery module related to at least one example of the present invention, it is possible to form the waterproof structure of the terminal portions of the plurality of battery cells integrally by applying and curing the waterproof adhesive to the intermediate frame partitioning the plurality of battery cells within the case.

## Claims

1. A battery module comprising:
a plurality of battery cells having terminal portions;
a case having a plurality of seating portions in which each battery cell is seated and having an accommodation space in which the plurality of battery cells is accommodated;
an intermediate frame having a plurality of support holes with a diameter larger than the diameter of each battery cell and mounted on the case to divide the accommodation space in the case into a cooling space where cooling liquid is accommodated and a terminal exposure space where the terminal portion of each battery cell is located; and
a potting portion having a first region provided in the terminal exposure space to surround the terminal portion of the battery cell and one side of the intermediate frame, and a second region connected to the first region and filled into the space between each battery cell and the support hole.

2. The battery module according to claim 1, wherein
the potting portion is provided so that the second region surrounds at least a portion of the gap space between the support hole and the battery cell.

3. The battery module according to claim 1, wherein
the first region and the second region of the potting portion are formed integrally.

4. The battery module according to claim 1, further comprising
a bus bar electrically connected to the terminal portion of the battery cell in the terminal exposure space, wherein
the potting portion is provided to surround the terminal portion of the battery cell and the bus bar in the terminal exposure space.

5. The battery module according to claim 4, wherein
the terminal portion comprises a positive electrode terminal and a negative electrode terminal, where
the positive electrode terminal and the negative electrode terminal are electrically connected to a positive electrode bus bar and a negative electrode bus bar, respectively, in the terminal exposure space.

6. The battery module according to claim 1, wherein
the first region and the second region of the potting portion are formed by applying and curing a waterproof adhesive to the terminal exposure space.

7. The battery module according to claim 6, wherein
the waterproof adhesive is obtained by mixing an epoxy-based main agent having a first viscosity and a curing agent having a second viscosity different from the first viscosity.

8. The battery module according to claim 6, wherein
the waterproof adhesive has a viscosity in a range of 25,000cp to 30,000cp.

9. The battery module according to claim 4, wherein
each battery cell has a vent portion provided in the opposite direction of the terminal portion connected to the bus bar, and
the seating portion of the case comprises a seating groove in which the vent portion of the battery cell is accommodated.

10. The battery module according to claim 9, further comprising an adhesive portion for attaching the vent portion of the battery cell to the seating groove.

11. The battery module according to claim 9, wherein
the case has a bottom provided with a plurality of seating grooves, and
the case has a plurality of vent grooves on the outer side of the bottom which is the opposite side of the seating groove.

12. The battery module according to claim 11, wherein
each vent groove is provided so that its center is positioned coaxially with the center of each seating groove.

13. The battery module according to claim 11, wherein
the case has a seating rib provided between the seating groove and the vent groove, where the seating rib has a thickness smaller than the thickness of the bottom of the case.

14. The battery module according to claim 13, further comprising
a lower frame connected to the case to surround the vent groove.

15. The battery module according to claim 14, wherein
a flame discharged through the vent portion of the battery cell moves to the space between the vent groove and the lower frame.
